# EUROPÄISCHE PATENTANMELDUNG

(11) **EP 4 338 931 A1**
(43) Veröffentlichungstag der Anmeldung: **20.03.2024**
(21) Anmeldenummer: 23192395.4
(22) Anmeldetag: 21.08.2023
(51) Int. Cl.: B29C 49/42

(54) **TRANSPORTVORRICHTUNG ZUM TRANSPORT VON VORFORMLINGEN, BLASFORMANLAGE SOWIE VERFAHREN ZUM TRANSPORT**

(30) Priorität: 19.09.2022 DE 102022123914
(71) Anmelder: KHS GmbH, 44143 Dortmund (DE)
(72) Erfinder: Heller, Alexander, 22941 Bargteheide (DE); Lewin, Frank, 22889 Tangstedt (DE)

(57) **Zusammenfassung**

Die Erfindung betrifft eine Transportvorrichtung zum Transport von Vorformlingen (1) mit einer sich entlang einer Förderrichtung (F) erstreckenden Fördergasse (2) und mit zumindest einem parallel zur Fördergasse (2) angeordneten Antriebskanal (3), welcher an einen Fluidverdichter anschließt und dazu ausgebildet ist, die Vorformlinge (1) in der Fördergasse (2) mit einem zumindest teilweise in Förderrichtung (F) verlaufenden Fluidstrom (5) zu beaufschlagen. Erfindungsgemäß weist der Antriebskanal (3) zumindest ein stellbares Leitelement (6) zur Beeinflussung des Fluidstroms (5) auf.

## Beschreibung

Die vorliegende Erfindung betrifft eine Transportvorrichtung zum Transport von Vorformlingen mit einer sich entlang einer Förderrichtung erstreckenden Fördergasse und mit einem parallel zur Fördergasse angeordneten Antriebskanal, welcher an zumindest einen Fluidverdichter anschließt und dazu ausgebildet ist, die Vorformlinge in der Fördergasse mit einem zumindest teilweise in Förderrichtung verlaufenden Fluidstrom zu beaufschlagen. Im Zuge der Beaufschlagung mit dem Fluidstrom werden die Vorformlinge entlang der Förderrichtung in der Fördergasse transportiert.

Die Erfindung bezieht sich insbesondere auf Transportvorrichtungen aus der Getränkeindustrie. Bei den Vorformlingen handelt es sich um auch als Preforms bezeichnete Behälter, welche im Zuge einer Blasumformung zu Getränkebehältern ausgeformt werden. Hierzu müssen die Vorformlinge über eine Zuführeinrichtung der Blaseinrichtung zugeführt werden. Innerhalb der Zuführeinrichtung werden die Vorformlinge vereinzelt und ausgerichtet und üblicherweise innerhalb einer Heizvorrichtung aufgewärmt. Das Aufheizen erweicht das Material der Vorformlinge, welche üblicherweise aus einem thermoplastischen Kunststoff z. B. Polyethylenterephthalat (PET) gebildet sind. Innerhalb der Blaseinrichtung erfolgt dann das Einbringen eines unter Druck stehenden Fluids in den Innenbereich der Vorformlinge, wodurch sich diese aufweiten und in eine vordefinierte Kontur eingepresst werden. Die sich so herausgebildeten Getränkebehälter können dann in einem anschließenden Prozessschritt befüllt, verschlossen und verpackt werden.

Transportvorrichtungen der eingangs beschriebenen Art sind grundsätzlich aus dem Stand der Technik bekannt. Die Bewegung der Behälter wird durch das Einbringen eines Fluidstroms bewirkt. Bei diesem Fluidstrom handelt es sich üblicherweise um einen Luftstrom, welcher gerichtet auf die Vorformlinge eingebracht wird, so dass diese in Folge dessen entlang einer vordefinierten Transportstrecke innerhalb einer Fördergasse bewegt werden.

Im Gegensatz zu sogenannten Transportrutschen werden die Vorformlinge also aktiv angetrieben, während bei einer Transportrutsche die Bewegung der Preforms allein aufgrund des Eigengewichtes und einer gewissen Schrägstellung der Fördergasse bewirkt wird. Im Gegensatz dazu kann bei einer mit einem Fluidstrom betriebenen Transportvorrichtung die Fördergasse im Allgemeinen horizontal angeordnet sein, wodurch sich der Anwendungsbereich gegenüber den Transportrutschen wesentlich erweitert.

Transportvorrichtungen der eingangs beschriebenen Art haben sich in der Praxis grundsätzlich bewährt. Allerdings werden die Vorformlinge üblicherweise nicht kontinuierlich der Transportvorrichtung zugeführt. Hierbei ist zu beachten, dass derartige Transportvorrichtungen häufig hinter einem Steigförderer und einem daran anschließenden Rollensortierer angeordnet sind. Über den Steigförderer wird eine gewisse Anzahl von Vorformlingen einem Sammelbehälter entnommen und diese sodann gefördert und dem Rollensortierer zugeführt. In dem Rollensortierer erfolgt Ausrichtung der Vorformlinge, wobei je nach Menge der zugeführten Vorformlinge mal mehr und mal weniger Vorformlinge innerhalb eines gewissen Streckenabschnittes vorliegen.

Entsprechend können die Vorformlinge auch innerhalb der Transportvorrichtung mit größeren oder mit kleineren Abständen zueinander angeordnet sein, wobei insbesondere bei größeren Abständen die Vorformlinge durch Beaufschlagung mit dem Fluidstrom stark beschleunigt werden und auf davor stehende Vorformlinge auflaufen. Durch das Aufschlagen der Vorformlinge können diese insbesondere im Bereich des Neckringes beschädigt werden und sind dann nicht mehr für den weiteren Einsatz als Getränkebehälter geeignet. Dieses Problem ist insbesondere bei vergleichsweise kleinen Vorformlingen problematisch, welche zugleich mit hohen Fördergeschwindigkeiten transportiert werden.

Bislang wurde diesem Problem dadurch begegnet, dass die den Fluidstrom erzeugenden Fluidverdichter im Bereich des Elektroantriebsmotors einen sogenannten Bremswiderstand aufweisen, welcher die Drehzahl des Motors und damit auch die Leistung des Fluidverdichters verringert. Auch dieses Prinzip hat sich grundsätzlich bewährt. Allerdings ist bei besonders hohen Durchsetzen, insbesondere bei Durchsetzen von mehr als 90.000 Vorformlingen pro Stunde, die Reaktionsfähigkeit dieses Bremswiderstandes zu lang, um auf entsprechende Lücken in einer Kette von Vorformlingen reagieren zu können.

Der Erfindung liegt daher die Aufgabe zugrunde, eine Transportvorrichtung anzugeben, welche sich gegenüber den bislang bekannten Lösungen dadurch auszeichnet, dass eine schnelle und effiziente Absenkung der Fördergeschwindigkeiten innerhalb der Transportvorrichtung ermöglicht wird.

Gegenstand und Lösung dieser Aufgabe ist eine Transportvorrichtung gemäß Patentanspruch 1. Entsprechend weist der Antriebskanal zumindest ein stellbares Leitelement zur Beeinflussung des Fluidstromes auf. Hierbei geht die Erfindung von der Erkenntnis aus, dass die Fördergeschwindigkeit der Vorformlinge nicht nur von der Leistung des Fluidverdichters sondern vielmehr auch von dem Winkel sowie von der auf die Vorformlinge einwirkenden Teilvolumenströme des Fluidstroms abhängig ist. Durch gezieltes Verstellen des zumindest einen Leitelementes kann daher der in Förderrichtung auf die Vorformlinge einwirkende Fluidstrom für einen gewissen Zeitabschnitt wirksam verringert werden, wobei die Verstellung des zumindest einen Leitelementes sehr viel schneller erfolgen kann als ein Herunterfahren des Fluidverdichters durch Einbindung eines Bremswiderstandes.

Gemäß einer bevorzugten Ausgestaltung der Erfindung weist der Antriebskanal in einer die Fördergasse begrenzenden Wandung, insbesondere in einer der Fördergasse abgewandten Wandung, zumindest eine Öffnung auf, wobei das zumindest eine stellbare Leitelement dazu eingerichtet ist, ein aus der Öffnung austretenden Teil des Volumenstroms einzustellen. Entsprechend erfolgt die Beeinflussung des Fluidstroms dadurch, dass nicht der gesamte Anteil des Fluidstroms in die Fördergasse zum Antrieb der Vorformlinge eingeleitet wird. Vielmehr wird durch Stellung des Leitelementes ein bestimmter Anteil des Fluidstroms nach außen geleitet und kann daher nicht zur Beschleunigung der Vorformlinge beitragen.

Die Einstellung des aus der Öffnung austretenden Teils des Volumenstroms kann beispielsweise dadurch erfolgen, dass das Leitelement in unterschiedlichen Betriebszuständen die Öffnung unterschiedlich stark begrenzt. Darüber hinaus ist es auch möglich, dass das Leitelement eine aus der Öffnung austretende Strömung bzw. den austretenden Teil des Volumenstroms unterschiedlich stark umgelenkt, sodass auch hierdurch der austretende Teil des Volumenstroms eingestellt werden kann.

Besonders bevorzugt ist in diesem Zusammenhang eine Ausgestaltung, bei der das zumindest eine stellbare Leitelement die Öffnung in einem Betriebszustand verschließt und in zumindest einem weiteren Betriebszustand öffnet. Somit erfolgt in einem ersten Betriebszustand eine vordefinierte Beschleunigung der Vorformlinge. Wird dann eine entsprechende Lücke innerhalb des Stroms von Vorformlingen detektiert, kann das Leitelement die Öffnung definiert in einem zweiten Betriebszustand öffnen und hierdurch eine Reduzierung der Beschleunigung der Vorformlinge erreichen. In diesem Zusammenhang kann es daher zweckmäßig sein, wenn ein oder mehrere Beladungssensoren entlang der Fördergasse angeordnet sind, welche die Beladung der Fördergasse von Vorformlingen kontinuierlich überwachen und eine entsprechende Rückmeldung an eine Steuereinheit übermitteln, welche dann eine Stellung des zumindest einen Leitelementes bewirkt.

Bevorzugt ist das zumindest eine stellbare Leitelement verschwenkbar ausgebildet. Folglich handelte sich bei dem Leitelement um eine Stellklappe bzw. eine Absperrklappe, wobei durch Verschwenken des Leitelementes bzw. der Stellklappe ein Öffnen und Schließen der Öffnung in dem Antriebskanal bewirkt werden kann. Das stellbare Leitelement kann darüber hinaus auch verschiebbar und/oder verdrehbar ausgebildet sein.

Bevorzugt ist dem zumindest einen Leitelement eine Antriebseinrichtung zugeordnet. Hierbei kann es sich insbesondere um einen Elektromotor, vorzugsweise um einen Schrittmotor oder Linearmotor handeln, welcher definiert und mit einer geringen Stellzeit eine Verstellung des Leitelementes bewirken kann. Alternativ ist auch ein Pneumatikzylinder möglich.

Mit Vorteil können darüber hinaus mehrere Leitelemente in Förderrichtung hintereinander angeordnet sein, sodass der Antriebskanal auch positionsbedingt angesteuert werden kann. Eine solche Ausgestaltung ist insbesondere dann sinnvoll, wenn mehrere Sensoren die Auslastung der Fördergasse entlang der Transportstrecke überwachen, wobei dann gezielt in den Beschleunigungsprozess der Vorformlinge eingegriffen werden kann. Die Leitelemente können bevorzugt identisch ausgebildet sein und insbesondere jeweils eine Öffnung auf einer der Fördergassen abgewandten Seite des Antriebskanals verschließen oder öffnen. Entsprechend weist dann auch jedes Leitelement bevorzugt eine eigene Antriebseinrichtung auf, um eine entlang der Förderrichtung unabhängige Ansteuerung der einzelnen Elemente zu bewirken. Selbstverständlich liegt es aber auch im Rahmen der Erfindung, dass sämtliche Leitelemente gleichermaßen mit nur einer Antriebseinrichtung angesteuert werden.

Besonders vorteilhaft ist in diesem Zusammenhang eine Ausgestaltung, bei der der Antriebskanal in mehrere Antriebskanalabschnitte aufgeteilt ist, wobei dann die Antriebskanalabschnitte voneinander getrennt sind und jeder Antriebskanalabschnitt ein stellbares Leitelement aufweist. Die Antriebskanalabschnitte können dann in Förderrichtung hintereinander angeordnet sein.

Eine besonders bevorzugte Ausgestaltungform der Erfindung sieht vor, dass zwischen dem Antriebskanal und der Fördergasse eine Vielzahl von Führungselementen zur Einleitung der Fluidstrom in die Fördergasse vorgesehen ist. Hierbei ist zu beachten, dass sich der Antriebskanal bevorzugt parallel neben der Fördergasse erstreckt und der Fluidstrom verteilt über die Länge der Fördergasse eingeleitet werden muss, um eine möglichst gleichförmige Beschleunigung der Vorformlinge zu erreichen. Insbesondere sind hierzu Leitöffnungen in einer die Fördergasse begrenzenden Wandung, insbesondere in einer der Fördergasse zugewandten Wandung, des Antriebskanals vorgesehen, welche das Einströmen des Fluidstroms in einem vordefinierten Winkel ermöglichen.

Dieser Winkel ist bevorzugt schräg zu Förderrichtung angeordnet, sodass dem durch diese Leitöffnungen strömenden Fluidstrom eine Geschwindigkeitskomponente in Förderrichtung aufgeprägt wird, welche dann wiederum einen Antrieb der Vorformlinge in der Fördergasse ermöglicht. Der Winkel beträgt bevorzugt zwischen 30 und 60° zur Förderrichtung.

Bei dem Fluidverdichter handelt es sich bevorzugt um einen Luftverdichter, welcher entsprechend zur Verdichtung der Umgebungsluft eingerichtet ist. Die Verwendung von Luft als Fluidstrom ist besonders bevorzugt, da dieser nicht nur der Umgebungsluft entnommen sondern auch in einfacher Art und Weise wieder abgeführt werden kann. Die Umgebungsluft kann darüber hinaus vor dem Einleiten auch gefiltert werden, z.B. durch einen HEPA-Filter.

Wie zuvor erläutert sind zumindest die Antriebseinrichtungen der Leitelemente bzw. die Antriebseinrichtung des zumindest einen Leitelementes an eine Steuereinheit angeschlossen, sodass über die Steuereinheit eine Stellung der Leitelemente bewirkt werden kann. Besonders bevorzugt sind auch Beladungssensoren an die Steuereinheit angeschlossen, wobei dann der Steuereinheit die Beladung an einer oder mehrerer Positionen entlang der Fördergasse übermittelt werden kann. Auf Basis dieser Informationen ist die Steuereinheit dazu eingerichtet, die Antriebseinrichtungen anzusteuern, um eine Stellung der Leitelemente zu bewirken.

Gegenstand der Erfindung ist ferner eine Blasformanlage gemäß Patentanspruch 13 mit einer Blaseinrichtung zur Blasumformung der Vorformlinge und zumindest einer Zuführeinrichtung zur Zuführung der Vorformlinge in die Blaseinrichtung, wobei die Zuführeinrichtung zumindest eine erfindungsgemäße Transportvorrichtung aufweist.

Gemäß einer bevorzugten Ausgestaltung ist die erfindungsgemäße Transportvorrichtung vor einer Heizeinrichtung angeordnet, in der die Vorformlinge auf eine vorbestimmte Temperatur aufgeheizt werden, um eine Umformung in der Blaseinrichtung zu ermöglichen.

Darüber hinaus weist die Blasformanlage bevorzugt einen Rollensortierer und/oder einen Rotationsförderer auf. Hierdurch können die Vorformlinge vereinzelt und ausgerichtet werden. Die erfindungsgemäße Transportvorrichtung ist dann unmittelbar hinter dem Rollensortierer angeordnet bzw. schließt unmittelbar an den Rollensortierer an.

Gegenstand der Erfindung ist ferner ein Verfahren zum Transport von Vorformlingen gemäß Patentanspruch 14 in einer erfindungsgemäßen Transportvorrichtung, wobei die Vorformlinge der Transportvorrichtung zugeführt und durch Beaufschlagung mit einem Fluidstrom in der Fördergasse entlang einer Förderrichtung transportiert werden und wobei die Fluidströme durch Stellung des zumindest einen Leitelements beeinflusst wird.

Bevorzugt wird der Fluidstrom derart beeinflusst, dass eine Fördergeschwindigkeit der Vorformlinge verstellt wird.

Insbesondere ist vorgesehen, dass in einem ersten Betriebspunkt die Vorformlinge mit einer vordefinierten Fördergeschwindigkeit transportiert werden und durch Stellung des Leitelementes in einem zweiten Betriebspunkt die Fördergeschwindigkeit der Vorformlinge reduziert wird.

Darüber hinaus können auch mehrere Leitelemente vorgesehen sein, wobei die Leitelemente unabhängig voneinander verstellt werden.

Im Folgenden wird die Erfindung anhand eines Ausführungsbeispiels näher erläutert. Es zeigen:
- Fig. 1: eine isometrische Darstellung der erfindungsgemäßen Transportvorrichtung
- Fig. 2A, 2B: Schnittdarstellungen in einer Draufsicht in zwei verschiedenen Betriebszuständen
- Fig. 3A, 3B: die Darstellungen gemäß den Figuren 2A und 2B in einer Schnittdarstellung senkrecht zur Transportrichtung.

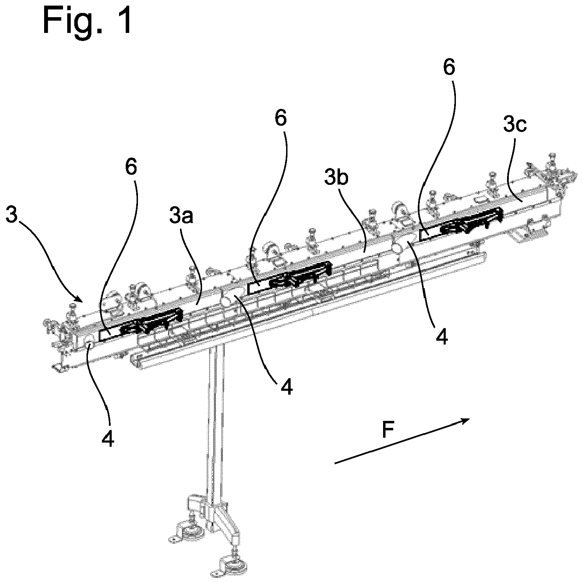

Die Fig. 1 zeigt eine schematische Darstellung der erfindungsgemäßen Transportvorrichtung zum Transport von Vorformlingen 1. Die Transportvorrichtung weist eine Fördergasse 2 auf, welche in der Fig. 1 durch das Gehäuse der Transportvorrichtung verdeckt ist, und einen Transport der Vorformlinge 1 in Förderrichtung F ermöglicht. Parallel zu der Fördergasse 2 ist ein Antriebskanal 3 angeordnet, welcher gemäß der Fig. 1 in drei in Förderrichtung F hintereinander angeordnete Antriebskanalabschnitte 3a, 3b, 3c ausgebildet ist, wobei der Antriebskanal 3 bzw. die Antriebskanalabschnitte 3a, 3b, 3c jeweils eingangsseitig über eine Zuführung 4 an einen nicht dargestellten Fluidverdichter anschließen, wobei der Fluidverdichter einen Fluidstrom 5 erzeugt, welcher über die Zuführungen 4 in den jeweiligen Antriebskanalabschnitt 3a, 3b, 3c eingebracht wird und wobei der Antriebskanal 3 in den Antriebskanalabschnitten 3a, 3b, 3c dazu ausgebildet ist, die Vorformlinge 1 in der Fördergasse 2 mit dem Fluidstrom 5 derart zu beaufschlagen, dass die Vorformlinge 1 in Förderrichtung F transportiert werden.

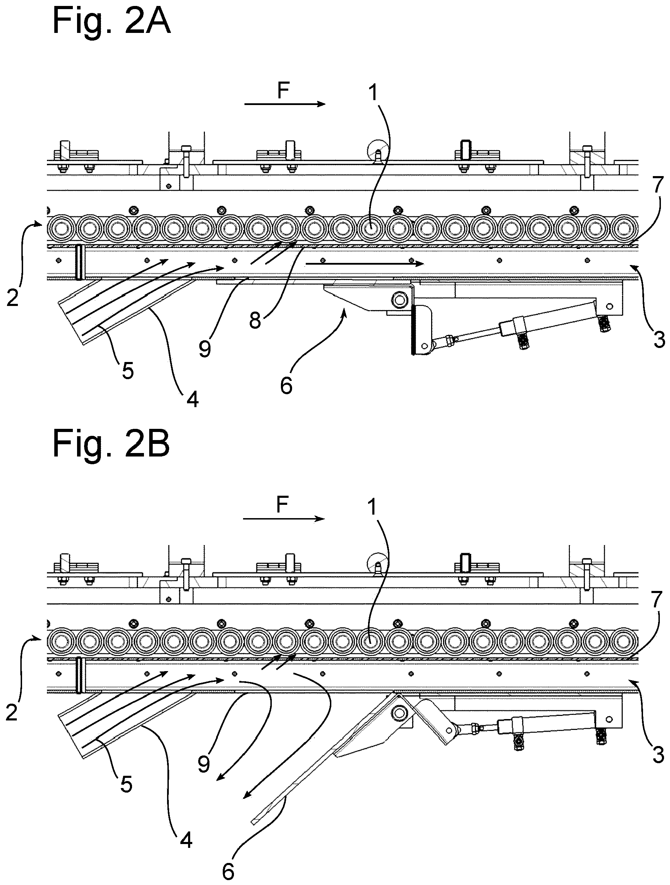

Der Fig. 1 ist darüber hinaus entnehmbar, dass in jedem Antriebskanalabschnitt 3a, 3b, 3c ein verschwenkbares Leitelement 6 in Form einer Klappe angeordnet ist, dessen Funktion insbesondere anhand der Fig. 2A bis 3B besser erläutert werden kann.

Die Fig. 2A und 2B zeigen in diesem Zusammenhang eine Draufsicht in einer Schnittdarstellung auf die Transportvorrichtung, wobei insbesondere einer der Antriebskanalabschnitte 3a, 3b, 3c näher dargestellt ist.

Gemäß der Fig. 2A werden die Vorformlinge 1 in der Fördergasse 2 in Förderrichtung F transportiert, wobei der Antriebskanal 3 über eine erste Wandung 7 an die Fördergasse 2 anschließt und wobei in dieser ersten Wandung 7 eine Vielzahl von Führungselementen 8 in Form von schrägen Leitöffnungen angeordnet sind, über die der Fluidstrom 5 derart in die Fördergasse 2 eingebracht werden kann, dass dieser schräg auf die Vorformlinge einwirkt, wobei der einwirkende Teil des Fluidstroms 5 zumindest eine Geschwindigkeitskomponente in Förderrichtung F aufweist.

Durch eine solche Ausgestaltung ist es möglich, die Vorformlinge 1 entlang der Förderrichtung F zu transportieren, wobei gemäß der Fig. 2A der Fluidstrom 5 vollständig über den Antriebskanal 3 und die erste Wandung 7 in die Fördergasse 2 eingebracht wird. Hierzu ist das verschwenkbare Leitelement 6 in dem dargestellten ersten Betriebszustand so eingestellt, dass es eine Öffnung 9 in einer zweiten der Förderergasse 2 abgewandten Seite des Antriebskanals 3 verschließt.

Allerdings kann es notwendig sein, die Antriebsleistung, welche auf die Vorformlinge 1 einwirkt schnell und für ein definiertes Zeitintervall herunterzusetzen. Ein solcher zweiter Betriebszustand ist in der Fig. 2B dargestellt, wobei das stellbare Leitelement 6 verschenkt wird und die Öffnung 9 freigibt. Entsprechend wird ein Teil des Fluidstroms 5 nicht in die Fördergasse 2 eingebracht, sondern strömt unmittelbar nach Einbringen über die Zuführung 6 wieder aus dem Antriebskanal heraus. Hierdurch wird die auf die Vorformlinge 1 einwirkende Antriebsleistung heruntergesetzt, sodass die Vorformlinge 1 nicht oder nicht mehr so stark beschleunigen können, wie dies im Betriebszustand gemäß der Fig. 2A der Fall ist.

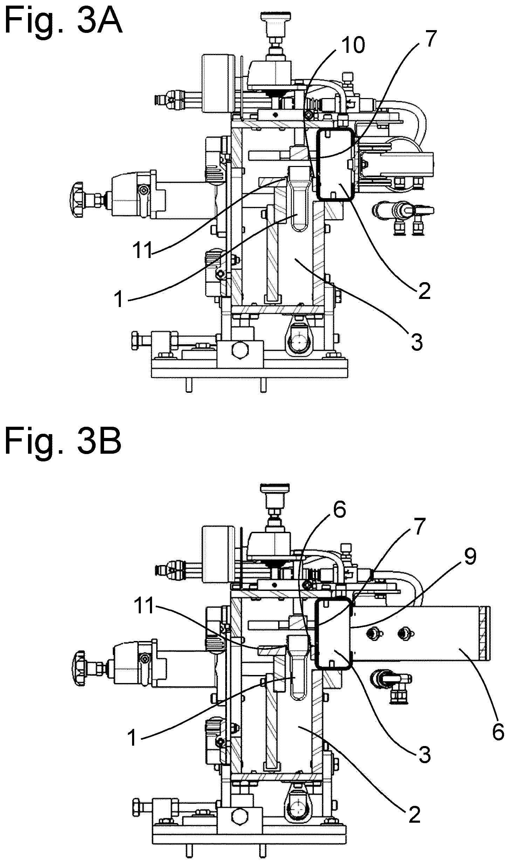

Die Fig. 3A und 3B zeigen darüber hinaus eine Darstellung in Richtung der Förderrichtung F. In der Fig. 3A ist wieder der erste und in der Fig. 3B der zweite Betriebszustand dargestellt, wobei gemäß der Fig. 3B das Leitelement 6 die Öffnung 9 freigibt. Darüber hinaus ist ersichtlich, dass die Vorformlinge 1 mit ihrem Neckring 10 auf einer Neckringführung 11 gehalten sind und entlang der Förderrichtung F transportiert werden können.

Gemäß der in den Figuren dargestellten Ausführungsform handelt es sich bei dem Fluidstrom 5 um einen Luftstrom, sodass folglich der Fluidverdichter ein Luftverdichteter ist, welcher die Umgebungsluft verdichtet und sodann über die Zuführungen 6 einem entsprechenden Antriebskanalabschnitt 3a, 3b, 3c zugeführt wird.

### Bezugszeichenliste:

- 1: Vorform linge
- 2: Fördergasse
- 3: Antriebskanal
- 3a,3b,3c: Antriebskanalabschnitte
- 4: Zuführung
- 5: Fluidstrom
- 6: Leitelement
- 7: erste Wandung
- 8: Führungselemente
- 9: Öffnung
- 10: Neckring
- 11: Neckringführung
- F: Förderrichtung

## Patentansprüche

1. Transportvorrichtung zum Transport von Vorformlingen (1) mit einer sich entlang einer Förderrichtung (F) erstreckenden Fördergasse (2) und mit zumindest einem parallel zur Fördergasse (2) angeordneten Antriebskanal (3), welcher an einen Fluidverdichter anschließt und dazu ausgebildet ist, die Vorformlinge (1) in der Fördergasse (2) mit einem zumindest teilweise in Förderrichtung (F) verlaufenden Fluidstrom (5) zu beaufschlagen,
**dadurch gekennzeichnet, dass**
der Antriebskanal (3) zumindest ein stellbares Leitelement (6) zur Beeinflussung des Fluidstroms (5) aufweist.

2. Transportvorrichtung nach Anspruch 1, **dadurch gekennzeichnet, dass** der Antriebskanal (3) in einer die Fördergasse (2) begrenzenden Wandung zumindest eine Öffnung (9) aufweist, und wobei das zumindest eine stellbare Leitelement (6) dazu eingerichtet ist, einen aus der Öffnung (9) austretenden Teil des Fluidstroms (5) einzustellen.

3. Transportvorrichtung nach Anspruch 2, **dadurch gekennzeichnet, dass** das zumindest eine stellbare Leitelement (6) die Öffnung (9) in einem ersten Betriebszustand verschließt und in zumindest einem zweiten Betriebszustand öffnet.

4. Transportvorrichtung nach einem der vorangegangenen Ansprüche, **dadurch gekennzeichnet, dass** das zumindest eine Leitelement (6) verschwenkbar, verschiebbar und/oder verdrehbar ausgebildet ist.

5. Transportvorrichtung nach einem der vorangegangenen Ansprüche, **dadurch gekennzeichnet, dass** dem zumindest einen Leitelement (6) zur Verstellung eine Antriebseinrichtung zugeordnet ist.

6. Transportvorrichtung nach einem der vorangegangenen Ansprüche, **dadurch gekennzeichnet, dass** der Antriebskanal (3) eine Vielzahl von Leitelementen (6) in Förderrichtung (F) hintereinander aufweist.

7. Transportvorrichtung nach einem der vorangegangenen Ansprüche, **dadurch gekennzeichnet, dass** zwischen dem Antriebskanal (3) und der Fördergasse (2) eine Vielzahl von Führungselementen (8) zur Einleitung des Fluidstroms (5) in die Fördergasse (2) vorgesehen sind.

8. Transportvorrichtung nach Anspruch 6, **dadurch gekennzeichnet, dass** die Führungselemente (8) als Leitöffnungen in einer die Fördergasse (2) begrenzenden Wandung (7) des Antriebskanals (3) ausgebildet sind.

9. Transportvorrichtung nach Anspruch 7, **dadurch gekennzeichnet, dass** die Leitöffnungen in einem Winkel schräg zur Förderrichtung (F) angeordnet sind.

10. Transportvorrichtung nach Anspruch 8, **dadurch gekennzeichnet, dass** der Winkel zwischen 30° und 60° beträgt.

11. Transportvorrichtung nach einem der vorangegangenen Ansprüche, **dadurch gekennzeichnet, dass** der Fluidverdichter zur Verdichtung der Umgebungsluft eingerichtet ist.

12. Transportvorrichtung nach einem der vorangegangenen Ansprüche, **dadurch gekennzeichnet, dass** zumindest die Antriebseinrichtungen an eine Steuereinheit angeschlossen sind.

13. Blasformanlage mit einer Blaseinrichtung zur Blasumformung der Vorformlinge (1) und zumindest einer Zuführeinrichtung zur Zuführung der Vorformlinge (1) in die Blaseinrichtung, wobei die Zuführeinrichtung zumindest eine Transportvorrichtung nach einem der vorangegangenen Ansprüche aufweist.

14. Verfahren zum Transport von Vorformlingen (1) in einer Transportvorrichtung nach einem der vorangegangenen Ansprüche, wobei die Vorformlinge (1) der Transportvorrichtung zugeführt und durch Beaufschlagung mit einem Fluidstrom (5) entlang einer Förderrichtung (F) transportiert werden, wobei der Fluidstrom (5) zumindest durch Stellung des zumindest einen Leitelements (6) beeinflusst wird.

15. Verfahren nach Anspruch 13, wobei der Fluidstrom (5) derart beeinflusst wird, dass eine Fördergeschwindigkeit der Vorformlinge (1) verstellt wird.
